# EUROPEAN PATENT APPLICATION

(11) **EP 2 503 492 A1**
(43) Date of publication of application: **26.09.2012**
(21) Application number: 10809273.5
(22) Date of filing: 16.11.2010
(51) Int. Cl.: G06N 5/00

(54) **SYSTEM AND METHOD FOR AUTOMATICALLY PUBLISHING UPDATED STATUS INFORMATION RELATING TO A USER IN A COMPUTER APPLICATION**

(30) Priority: 16.11.2009 ES 200930998
(71) Applicant: Telefónica, S.A., 28013 Madrid (ES)
(72) Inventor: SAINZ GONZALEZ, David, E-28013 Madrid (ES); FERNANDEZ GRANDE, María, Cristina, E-28013 Madrid (ES)
(74) Representative: Carpintero Lopez, Francisco
(86) International application number: PCT/ES2010/070734
(87) International publication number: WO 2011/058211

(57) **Abstract**

The invention relates to a system and method for the automatic publication of status information (13) of a user in a computer application (1) by means of the automatic generation by artificial intelligence means (5) of inferred information (10) from environment information (9) obtained by a mobile terminal of said user.

## Description

### Field of the Invention

The present invention is applied to the telecommunications field, and more specifically, to the automatic update of information in computer applications such as social networks.

### Background of the Invention

A number of microblogging (publication of short texts informing about the current status of a person and what he/she does on a day to day basis) initiatives have currently been started by different companies. The use of this phenomenon is surpassing classic blogging, in which people publish more detailed texts about specific subjects or diverse opinions. There are alternatives designed for both Web social network platforms and for mobiles for the products currently on the market.

A social network, in this context, is a computer tool which is usually accessed through a web interface although there are also social networks accessible from mobile telephones. Social networks allow users to keep in touch with their friends and acquaintances, share multimedia contents, publish their status, exchange messages, etc., either for entertainment purposes, work purposes or any other type of purpose.

Instant messaging systems such as MSN Messenger were possibly one of the first to provide microblogging, which in its latest versions allows each user to publish a short text with the current status, which will subsequently appear next to the nickname (a name chosen by the user).

With respect to purely Web versions, the most emblematic product is Twitter (http://twitter.com), one of the pioneers and the most popular in the microblogging world. It enables publishing short messages of around 150 characters which essentially describe what is being done at any given time. The page also allows keeping track of other users to receive their new messages.

The creation of Twitter was a resounding success and a change in the way in which users publish their status. The success has become so great that there is now talk of a special type of blog called tumblelog. In the tumblelog, the text entry is shorter than a blog and is usually much more random, it expresses the thoughts of the author at a given time, without the text therefore taking on the form of an article or post. Due to this tendency which is beginning to be consolidated, a number of social networks such as Facebook (http://www.facebook.com/) or Hi5 (http://www.hi5.com/) have included a microblogging option in their profiles.

The high popularity of this phenomenon and the fact that its messages are short and quick to write, has enabled microblogging to expand towards mobile terminals. Given the features of such mobile terminals, the status messages can be sent from anywhere and almost any location, without the need for a person to access a desktop PC or laptop. This environment seems the most suitable for writing microblogs. Another feature which is currently being used is the capacity of the mobile to obtain location information.

Thus, existing products such as Facebook, Twitter and others have adapted mobile versions so that their users can access from their mobile telephones and PDAs in any place, updating their status information at any time.

Furthermore, the tendency of taking microblogging has paved the way for applications especially designed for these devices, such as Radar (http://radar.net) for example, a mobile application which forms a social network in which its users publish comments (with or without photos) and share experiences between them, all this through an interface in a mobile telephone.

On the other hand, current mobile terminals have a series of added features, such as for example possibilities of location (via GPS or other options) or of access to external information through an Internet connection.

Services such as Loopt (http://www.loopt.com) use part of these possibilities since they allow seeing on their screen the location of several contacts in a map, as well as seeing the current status of each one. It allows publishing the status from the telephone itself so that the rest of the contacts are updated.

Nevertheless, services of this type use basic information extracted by the mobile, mainly related to the location, so they do not use the whole capacity for obtaining information thereof, requiring in all the cases the intervention of the user when publishing information about the status thereof.

### Summary of the Invention

The present invention solves the previous problem by means of a method and system which allow automating the publication of entries about statuses of the user in computer applications (such as microblogs, social networks, etc) by means of applying artificial intelligence to information obtained by a mobile device on the location and environment of the user. The automatic update of the most usual statuses of the user (for example, working, at home, or travelling) is thus achieved, without the user having to spend time on this task.

In a first aspect of the present invention, a system is set forth which updates status information from environment information obtained by a mobile device from the user himself/herself. Said environment information varies depending on the capabilities of each mobile device (included sensors and connectivity options), the location, temperature, meteorological information obtained through the internet, etc. being examples thereof.

The system comprises to that end:
- storage means for conserving information necessary for the operation of the system as described below.
- compilation means configured to store the environment information in the storage means. Said compilation means are the interface between the system and the sources of information of the mobile device.
- personalisation means allowing the user to initially give meaning to part of the environment information. The system thus performs a learning (which can be subsequently debugged by the user providing more semantic information) which subsequently allows it to obtain automatic conclusions about the status of the user. The personalisation means also allow the user to set conditions about which user information is finally published in the application for the purpose of maintaining the control over the degree of privacy thereof.
- Artificial intelligence means, which automatically generate inferred information from the environment information, considering the available semantic information and, preferably, from previous user status information. There are two preferred options for said artificial intelligence methods.
   - Means for inferring logic predicates based on rules and conditions.
   - Bayesian Networks, which are trained to adapt their output to the semantic information entered by the user for the different combinations of environment information (and, where appropriate, previous statuses)
- Distribution means, which are the interface with the application. The distribution means connect with the computer application and publish therein the updated user status information from the environment information and the inferred information, provided that they do not come into conflict with the privacy options entered by the user.

In another aspect of the invention, a method is set forth for updating said status information by means of obtaining environment information and semantic information, analysing them to generate inferred information and subsequently publishing them in the application.

These and other aspects of the invention will be apparent from the embodiments described below herein.

### Description of the Drawings

For the purpose of aiding to better understand the features of the invention according to a preferred practical embodiment thereof and to complement this description, the following illustrative and non-limiting figure is attached as an integral part thereof.

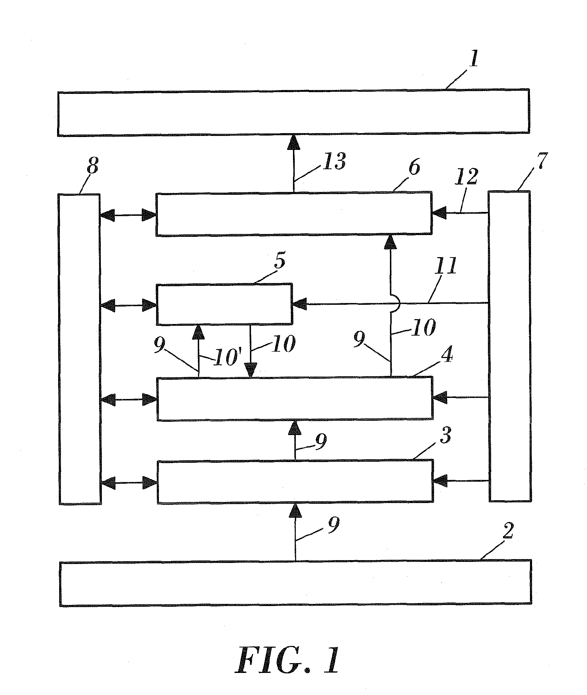

Figure 1 illustrates the system of the invention according to a practical embodiment thereof.

### Detailed Description of the Invention

In this text, the term "comprises" and its derivatives (such as "comprising", etc.) must not be understood in an excluding sense, i.e., these terms must not be interpreted as excluding the possibility that what is described and defined can include more elements, stages, etc.

Figure 1 shows a preferred embodiment of the system, by means of an architecture model which covers the features set forth above to provide service to automatic microblogging applications.

This architecture, due to its mobile characteristics and the services which it requires, is valid for platforms such as .NET or J2ME (Java 2 Platform, Micro Edition), for example. The latter is more suitable due to its greater acceptance in mobile phones, its PDA support and its ease for execution in servers.

This architecture has a global division in different layers or elements:
- Compilation means 3, comprising:
   - Context Plug-ins
   - Sensorisation Layer
- Storage means 4 or Storage Layer
- Artificial Intelligence Means 5 or Reasoning Layer
- Distribution Means 6 or Distribution Layer
- Personalisation means 7 or Profile and Preferences Layer
- Security and Privacy Services 8

In this text, primary or low-level context is understood as any environment information 9 which reaches the user through compilation means 3, regardless of its origin and nature; and high-level context is understood as the inferred information 10 generated by the artificial intelligence means, i.e., information which is not obtained directly from the environment but as a result of the combination and analysis of the primary context. Therefore, context information is understood as the set of primary and high-level context.

### CONTEXT PLUG-INS

This part of the architecture is the closest to the physical layer of the system. The architecture at this level is formed by different plug-ins which adhere to the system for acquiring environment information 9 (primary context). Each plug-in represents a type of environment information which can be obtained through a sensor 2 (sensor being understood as any source of information, either logical, physical or virtual sensors, and are already integrated in the mobile device itself or send information through a communications network).

Each plug-in is formed by two parts. The first is the part which deals directly with the source of information. Each sensor has its peculiarities and needs a specific plug-in for extracting the relevant primary context information. In the second part, the pre-process necessary for leaving the environment information in a format which the application can handle is performed.

Plug-ins are independent modules, which can be added or removed according to the needs of the architecture. The available plug-ins are thus detected and only the necessary ones are loaded. It is furthermore possible to extend the sensorisation capabilities by adding or creating new plug-ins for new sensors and types of environment information. It is a dynamic way of adapting the sensorisation to the vast variety of types of sensors which each device in particular has or has access to.

Each plug-in can access the communication layer through the services with which it is provided by the sensorisation layer hosting it . This is very useful especially in logical or virtual sensors which have to extract the primary context of external sources of information.

These plug-ins can be capable of both responding to consultation requests and notifying the status changes occurring therein.

The implementation of each plug-in is dependent on the nature of the primary context information, so it is different depending on the sensor or the source of information to be processed. It must, however, complete an interface which describes:
- SupportsNotification: It defines if the plug-in supports the notification mechanism.
- RegisterNotification: The method used for obtaining notifications of changes of values in the primary context information.
- GetType: It obtains the type of the primary context information which the sensor obtains.
- RequireslnternetAccess: It defines if the plug-in needs access to the network to be able to operate correctly.
- Activate: It activates and the plug-in and enables it.
- Deactivate: It disables and deactivates the plug-in.
- IsActive: It defines if the plug-in is active and working at the time of the call.
- GetData: It obtains the primary context information which the plug-in is capable of offering.
- CanWork: It defines if the plug-in has everything necessary to be able to be activated and work properly.

Examples of different plug-ins can be obtaining the location through GPS, obtaining the location through coverage cell, time, current temperature, traffic status, etc.

### SENSORISATION LAYER

This layer has an overview of all the available means for capturing primary context. It can activate and deactivate plug-ins on request to keep the necessary ones in the memory. The memory is thus kept optimised and only services that are really requested are offered. This layer is the one in charge of checking the correct operation of the plug-ins (for example, checking that there is sufficient hardware and physical layer for activating a plug-in) and providing them with communication capabilities. The sensorisation layer is prepared to perform consultations to the plug-ins and receiving notifications from them if necessary.

The layer activates the context plug-ins and offers itself as a receiver of their information. Once active, there are two ways in which this layer is capable of extracting the primary context information.
- Consultation: The plug-ins which request it (or are not capable of doing it in another way) offer an interface for being consulted, which is the same regardless of the type of plug-in. The layer accesses the interface of each of the plug-ins, performs the consultation and collects the primary context information that they return. With said primary context information, it in turn accesses the storage layer for storing them.
- Notification: The plug-ins which are capable of performing this notification mechanism provide, in addition to the consultation interface, a notification interface; which is also identical regardless of the type of plug-in. Under this method, the layer accesses each plug-in and is registered therein in such a way that when said plug-in experiences a change, it varies the content of its primary context information or simply desires it, it notifies the layer and offers the primary context information which it has obtained. Thus, the periodic consultation of the plug-in is prevented, and it is only notified when there is a relevant change which has to be informed. As in the previous case, once the new primary context information has been obtained, the storage layer is accessed.

The plug-ins must obligatorily provide the consultation mechanism and have to inform the sensorisation layer of whether they are capable of performing notifications. This is also performed through the interface.

The way in which the storage layer is accessed is described below.

A case of use of the operation of this sensorisation layer is to choose which location plug-in (GPS, coverage cell, etc.) it has available and which to activate depending on the hardware and the resources in the device. To find out if the necessary hardware is available, this layer makes an availability request to each plug-in, which responds if it has everything necessary. This layer attempts to activate a notification mechanism for each plug-in. If it is not possible, it calculates a suitable form of consultation frequency and is in charge of propagating the change to the storage layer.

### STORAGE LAYER

This layer is the base in which all the context information is stored. The information consultations from any point of the system reach this layer. The architecture is prepared for the possibility of generating notifications to other layers at the time at which certain information changes status. The sensorisation layer will store the obtained primary context information here and the reasoning layer uses this level to perform its tasks.

This is the level in the architecture in which there is an overview of the context information, since the information is only partial in the lower layers. The context information stored in the storage layer can come from different sources:
- Sensors of the sensorisation layer, either physical, logical or virtual.
- High-level context generated by the reasoning layer.

This layer also contains a Storage Agent, which is accessed to collect the context information which is needed and to store that which has been obtained. This agent receives the consultations and the commands and returns the responses either in the form of a normal return (request-consultation) or in the form of a notification if necessary, therefore being in charge of transferring the notifications of status changes inside the layer of this module.

All the accesses to the storage layer are performed through this agent. This agent checks the information access policies (described in the security and privacy services) and also notifies the changes therein. The agent provides methods for making information consultations and also for storing context information. The flow of information towards the rest of the elements of the architecture is centralised in the agent.

The sensorisation layer accesses the agent to store the primary context information and the reasoning layer will use it to store the high-level context.

The preferred form of implementation of the storage infrastructure which the agent accesses is a Database, although the alternative of using distributed storage mechanisms is perfectly viable.

If it is requested, an encrypted storage of the information can be required from the agent, which then accesses the Privacy and Security services 8 to encrypt the data and decrypt them at the time of the consultation. If the encryption of the data has been requested, in the consultation, in addition to checking the access permissions, the necessary keys for decrypting them are also requested.

### REASONING LAYER

This layer performs all the reasoning which takes place in the architecture. To that end, it uses all the context information, both that which has been obtained locally in the device (primary context) and that obtained with a high level. To that end, it is abstracted from the sensors, the only source of information thereof being the storage layer. This layer makes use of the Storage Agent to retrieve the information and to store the inferred information.

The reasoning of this layer can be of a different kind:
- Obtaining new context: The reasoning engine obtains high-level context through low-level context or other high-level context stored in the storage layer.
- Reacting and having a specific behaviour on the context: This provides the possibility of reasoning on the context information, not to obtain new information, but to decide which actions to take, for example if relevant microblogging information for publishing has been obtained.

The implementation of this reasoning layer is preferably for inferring logic predicates, in which the context information is stored in the storage layer and, furthermore, there are a series of conditions and rules stored in this same layer. The logical reasoning processes the available context information and subjects it to the stored rules and conditions. If the conditions are met, the expected conclusions are reached and automatic status messages are obtained.

There is also another possible implementation through Bayesian Networks, in which a network is created and is trained in such a way that it learns how to obtain the desired conclusions from the context information which is given as an input. Once trained, it is used to extract the automatic microblog entries given a set of context information.

### DISTRIBUTION LAYER

Once the reasoning layer has obtained relevant conclusions, i.e., high-level context, it stores them in the storage layer. As has been stated above, it does this through the storage agent.

The sensorisation layer also uses the agent for storing the primary context information.

As a result, the storage agent is capable of detecting all the changes in the context information when the accesses are channelled. Thus, it is in turn capable of performing notifications towards the distribution layer.

The distribution layer is in charge of distributing the information to the application or applications 1 using the architecture. It also involves an intermediary if an application wishes to consult the storage layer. Therefore, since there is both consultation and notification to the applications, this layer has the two same consultation and notification methods described in the sensorisation layer.

When new context information, which is generally created by the reasoning layer, is notified, the distribution layer informs the interested applications of this and delivers the context information.

In the same way, the applications can consult the distribution layer for context information of a determined type.

In order to achieve a level of abstraction between the specific context information and the type of information which is sent to the applications, the higher levels do not know if a piece of context information comes from a sensor or a reasoning. They do not which specific sensors are available either. Therefore, an application may show interest in types of information. It can make consultations or subscribe to notifications of specific types of information. The architecture (specifically the storage agent) is capable of seeing if these types of information can be obtained or if, in contrast, the system is incapable of obtaining them.

When a change is detected and a notification thereof is to be sent, the distribution layer first examines the type of information in question and, with it, verifies if the application is interested in it. This way of verification is described in the profile and preferences services.

As mentioned above, the context and its types of information are very extensive. Therefore, freedom for consulting types of information without restrictions is given, and each context plug-in is given the chance to define which type of information it is capable of obtaining. The reasoning layer, together with the storage layer, can define the type of information concluded. All the information is thus stored together with its type, which is directly given by the source which has obtained it.

In this way it is possible to abstract the particularities of the internal information from the external elements of the architecture. For example, a type of information might be "location" and many context plug-ins can obtain it, by GPS (Global Positioning System), by proximity to another person or other methods. The reasoning layer can also store a piece of inferred information of the "location" type if it has concluded that the current place is "Museo del Prado".

### SECURITY AND PRIVACY SERVICES

Working with context information of a user means processing and even storing sensitive and private information. It is therefore necessary for the architecture to protect the information with which it works as much as possible.

To that end, there are privacy and security services which protect the information from attackers and malicious intent. These services are global for the entire architecture, being able to be used by the components which need it. The services vary from data encryption and the protection of information, to the creation of context information access policies for all those who wish to access the information or the assurance of the different data protection laws.

A data access policy is a series of persistently recorded permissions which issue rules of access to information: who can access which data. They can be manually assigned giving permissions to users one by one, or there may be predefined policies containing a set of permissions. These permissions describe whether there is reading or writing access to the data. When permissions are grouped in a set, a series of predefined authorisations for a set of data is obtained. Assigning them to a user is directly assigning permissions to a set of data for him/her.

The security and privacy services act as a protective layer of access to the information, and provide access policies so that only authorised entities can access the relevant data.

The security and privacy services store the authentication information and the access polices of each user, application or entity which is going to use the data in any way.

In this way, the applications access the services to authenticate a user or application. Internally, the entities themselves which use the context information can be authenticated in the same way. In the access to the storage layer, these services are accessed to check if the petitioner has been authenticated, consult his/her permissions in the access policies thereof and compare them with the permissions of the data which he/she is going to request. If everything is correct, the data is accessed, otherwise the access would be denied.

The functions of these services are:
- Authentication: The entities and applications using the architecture components are authenticated, to check that they are who they say they are. This mechanism is given by a name and password method.
- Registration of permissions and data access policies: Each user who is authenticated has the data types to which he has access stored.
- Checking of data access permissions: Data which one does not have access to must not be provided, whereby methods for checking if a user has permission for accessing a specific type of datum are provided.
- Data encryption: Data encryption mechanisms available through request. The petitioner is normally the storage agent.
- Configuration: Services for deleting and registering users, in addition to the modification of access permissions and policies. Only users of the Administrator type have access to these services.

### PROFILE AND PREFERENCES SERVICES

The profile and preferences layer allows reaching a balance between the freedom and the automaticity of the system. On one hand, the information which is obtained will be first compared with the profile which the user has defined, and which serves for flagging if it is really relevant for being published, at least at that time.

On the other hand, the way in which the microblogs are published must be balanced with the preferences of each user. In order to not interfere with the intentions of each person who uses the automatic microblogging, each microblog is compared with the preferences to see if its publication is possible and, if so, in what way does it has to be published.

The fact that the profile and preferences layer is part of the architecture enables reusing profiles between several applications. It is possible for one and the same user to have different preference profiles in different applications, but it is also possible to use exactly the same one in this way. The logic of comparison between the information obtained and the user's desire to obtain it is thus defined once in the architecture and not once per application.

As soon as the information is obtained by the reasoning layer, the next step is its distribution by the distribution layer, which as has already been mentioned, checks the preferences of the user with regards to what types of information he wishes to receive. To that end, it accesses these preferences services, in which the desired information and the information that is not considered relevant is registered per user.

If the services do not return a compatibility between the type of information obtained and the information desired, they are not passed to the user.

The functions of these profile and preferences services are:
- Registration of preferences of a user with respect to types which he is interested in receiving.
- Checking of preferences: Services for checking if a user is interested in receiving a specific type of datum.

### INFORMATION FLOW THROUGH THE ARCHITECTURE

The operation of the each layer in the given architecture has been described separately. To obtain a more global view, the way in which the information flows through the different layers is described.

The information begins to flow in the context plug-ins, which collect primary context information from the different sensors or sources of information. This primary context information is then passed to the sensorisation layer through the mentioned consultation and notification mechanisms. The sensorisation layer accesses the preferences services to obtain a global view of all the types of information in which the users are interested and thus activates the appropriate plug-ins. In this way, having active plug-ins which are not needed is prevented. Upon activating the plug-ins, it sends a reference to the communication layer, allowing the communication with the network if necessary.

This sensorisation layer also checks the correction of the primary context information and if the information passed through the plug-ins is valid for the system. If so, it accesses the storage agent to store the received primary context information, whereby the information will be able to flow towards the storage layer.

The storage agent sends out a warning to the distribution layer in case it is necessary to notify the applications of basic context information coming from sensors. It also stores the primary context information in the storage infrastructure. When processing this information, the agent accesses the Security and Privacy services to check the data access permissions and policies of each component.

This flow of information feeds the storage layer with primary context, allowing the reasoning layer to perform the relevant analysis. Said reasoning layer accesses the storage layer to perform information consultations. When the reasoning processing infers new high-level context, it also uses the agent to store them. The reasoning layer can even request high-level context information again in case it is needed again in other inference processes.

In the same as in the creation of primary context, the creation of high-level context passes through the storage agent, which has the opportunity of notifying the new high-level context towards the distribution layer. Thus, the distribution layer receives notifications of the two types of context information and can pass them to the applications. These applications, previously authenticated using the Security and Privacy services, register the preferences thereof in the Preferences Services. The distribution layer can check said preferences (using the Preferences Services) and the information access permissions (using the Privacy and Security services). If everything is correct and coincides with the preferences, the information passes towards the applications using the architecture.

The information which is transmitted to the applications is the automatic microblogging entries, or information very closely related to them.

If an application decides to consult a type of context information, it accesses the distribution layer, in which it is authenticated through the mentioned Security services. The layer checks the permissions for the application and the type of information consulted. If it has such permissions, the storage agent is accessed to obtain the context information.

In view of this description and figures, the person skilled in the art will understand that the invention has been described according to preferred embodiments thereof, but that multiple variations can be introduced in said embodiments, without departing from the object of the invention as it has been claimed.

## Claims

1. System for the automatic publication of updated status information (13) of a user in a computer application (1), said user having a mobile device capable of obtaining environment information (9) of the mobile device and the system comprising storage means (4);
**characterised in that** it comprises:
- compilation means (3) configured to store said environment information (9) in the storage means (4).
- personalisation means (7) configured to obtain semantic information (11) entered by the user on a subset of said environment information (9) and to obtain instructions (12) from the user on which environment information (9) and inferred information (10) to publish as status information (13);
- artificial intelligence means (5) configured to automatically generate the inferred information (10) from the environment information (9) stored in the storage means (4) and from the entered semantic information (11);
- distribution means (6) configured to publish environment information (9) and inferred information (10) as user status information (13) in the computer application (1) restricted according to the instructions (12) of the user;

2. System according to claim 1, wherein the artificial intelligence means (5) are configured to automatically generate the inferred information (10) from, furthermore, previous inferred information (10').

3. System according to any of the previous claims, wherein the artificial intelligence means (5) are means for inferring logic predicates based on rules and conditions.

4. System according to any of claims 1 and 2, wherein the artificial intelligence means (5) are Bayesian networks trained with the entered semantic information (11).

5. Method for the automatic publication of updated status information (13) of a user in a computer application (1), said user having a mobile device capable of obtaining environment information (9) of the mobile device;
**characterised in that** it comprises:
i) storing said environment information (9);
ii) obtaining semantic information (11) entered by the user on a subset of said environment information (9);
iii) automatically generating the inferred information (10) of the user from the stored environment information (9) and from the entered semantic information (11):
iv) obtaining instructions (12) from the user on which environment information (9) and inferred information (10) to publish as status information (13);
v) publishing environment information (9) and inferred information (10) as user status information (13) in the computer application (1) restricted according to the instructions (12) of the user;

6. Method according to claim 5, wherein step ii) comprises automatically generating the inferred information (10) from, furthermore, previous inferred information (10').

7. Method according to any of claims 5 and 6, wherein step ii) is performed by means for inferring logic predicates based on rules and conditions.

8. Method according to any of claims 5 and 6, wherein step ii) is performed by means of Bayesian networks trained with the entered semantic information (11).

9. Computer program comprising computer program code means adapted for performing the stages of the method according to any of claims 5 to 8, when the mentioned program is executed in a computer, a digital signal processor, an application-specific integrated circuit, a microprocessor, a microcontroller or any other form of programmable hardware.
